# EUROPEAN PATENT APPLICATION

(11) **EP 4 235 852 A1**
(43) Date of publication of application: **30.08.2023**
(21) Application number: 22767251.6
(22) Date of filing: 10.03.2022
(51) Int. Cl.: H01M 4/134, H01M 4/1395, H01M 10/052, H01M 10/0569, H01M 10/058

(54) **MATERIAL FOR NEGATIVE ELECTRODES, NEGATIVE ELECTRODE, LITHIUM SECONDARY BATTERY AND METHOD FOR PRODUCING MATERIAL FOR NEGATIVE ELECTRODES**

(30) Priority: 12.03.2021 JP 2021040663
(71) Applicant: SoftBank Corp., Tokyo 105-7529 (JP); Enpower Japan Corp., Tokyo 108-6028 (JP)
(72) Inventor: TAKAYANAGI Yoshiki, Tokyo 105-7529 (JP); SAITO Takaya, Tokyo 105-7529 (JP); MIYAKAWA Shuntaro, Tokyo 105-7529 (JP); CHE Yong, Tokyo 108-6028 (JP); TAKAHASHI Tsutomu, Tokyo 108-6028 (JP); MENG Fandong, Tokyo 108-6028 (JP)
(74) Representative: Michalski Hüttermann & Partner Patentanwälte mbB
(86) International application number: PCT/JP2022/010722
(87) International publication number: WO 2022/191297

(57) **Abstract**

A negative electrode material that is used for a negative electrode of a lithium secondary battery containing a non-aqueous electrolyte solution, includes: a first layer that contains lithium metal as a negative electrode active material; and a second layer that is arranged on at least one surface of the first layer. The second layer consists of a compound represented by a general formula MₓA_{y} (M is an element selected from a group consisting of Al, In, Mg, Ag, Si, and Sn, and A is an element selected from a group consisting of O, N, P, and F, and 0.3<x/y<3). The second layer has a thickness of 100 nm or less.

## Description

### BACKGROUND

### 1. TECHNICAL FIELD

The present invention relates to a negative electrode material, a negative electrode, a lithium secondary battery, and a manufacturing method for a negative electrode material.

### 2. RELATED ART

Patent Document 1 discloses a negative electrode in which lithium phosphorus oxynitride is formed on a front surface of a lithium metal layer. Patent Document 2 discloses a negative electrode in which an ion conductive material having a thickness of at least 0.5 µm is formed on a front surface of a lithium metal layer. Patent Document 3 discloses a negative electrode in which a sulfide-based inorganic material is formed on a front surface of a lithium metal layer.

### Prior Art Document

### Patent Document

Patent Document 1: Specification of U.S. Patent 5314765
Patent Document 2: Specification of U.S. Patent No. 10461372
Patent Document 3: Specification of U.S. Patent 10833360

### GENERAL DISCLOSURE

A first aspect of the present invention provides a negative electrode material. The negative electrode material is, for example, used for a negative electrode of a lithium secondary battery containing a non-aqueous electrolyte solution. The negative electrode material includes, for example, a first layer that contains lithium metal as a negative electrode active material. The negative electrode material includes, for example, a second layer that is arranged on at least one surface of the first layer. In the negative electrode material, the second layer consists of, for example, a compound represented by a general formula MₓA_{y} (M is an element selected from a group consisting of Al, In, Mg, Ag, Si, and Sn, and A is an element selected from a group consisting of O, N, P, and F, and 0.3<x/y<3). In the negative electrode material, the second layer has, for example, a thickness of 100 nm or less.

In the negative electrode material, the second layer may have a thickness less than 50 nm. In the negative electrode material, A may be an element selected from a group consisting of O and N.

A second aspect of the present invention provides a negative electrode. The negative electrode includes, for example, the negative electrode material according to the first aspect. The negative electrode includes, for example, a negative electrode current collector that is configured to hold the negative electrode material.

In the negative electrode, the second layer may be arranged to entirely cover the first layer arranged in contact with the negative electrode current collector. In the negative electrode, the second layer may be arranged such that a part of the second layer is in contact with the negative electrode current collector.

A third aspect of the present invention provides a lithium secondary battery. The lithium secondary battery includes, for example, the negative electrode according to the second aspect. The lithium secondary battery includes, for example, a positive electrode. The lithium secondary battery includes, for example, a non-aqueous electrolyte solution.

In the lithium secondary battery, the non-aqueous electrolyte solution may contain a cyclic carbonate having a fluorine atom. In the lithium secondary battery, a ratio of the cyclic carbonate having a fluorine atom to a whole of the non-aqueous electrolyte solution, may be 20 mol % or more and 80 mol % or less. In the lithium secondary battery, the cyclic carbonate having a fluorine atom may contain fluoroethylene carbonate (FEC) or difluoroethylene carbonate (DFEC).

In the lithium secondary battery, the negative electrode may contain an alloy of lithium, and an element represented by M contained in the second layer, after the lithium secondary battery is charged and discharged at least once. In the lithium secondary battery, the second layer may contain nitrogen as an element represented by A. In the lithium secondary battery, the negative electrode may contain lithium nitride, after the lithium secondary battery is charged and discharged at least once.

A fourth aspect of the present invention provides a method for manufacturing a negative electrode that is used for a lithium secondary battery containing a non-aqueous electrolyte solution. The method includes, for example, preparing a first layer that contains lithium metal as a negative electrode active material. The method includes, for example, forming a second layer on at least one surface of the first layer. In the method, the second layer consists of, for example, a compound represented by a general formula MₓA_{y} (M is an element selected from a group consisting of Al, In, Mg, Ag, Si, and Sn, and A is an element selected from a group consisting of O, N, P, and F, and 0.3<x/y<3). In the method, the second layer has, for example, a thickness of 100 nm or less.

The summary of the invention described above does not necessarily describe all necessary features of the embodiments of the present invention. In addition, the present invention may also be a sub-combination of the features described above.

### BRIEF DESCRIPTION OF THE DRAWINGS

Fig. 1 schematically shows an example of an internal structure of a storage battery 100.
Fig. 2 schematically shows an example of a manufacturing method for the storage battery 100.
Fig. 3 shows a result of a cycle characteristic test of a symmetric cell of example embodiment 1.
Fig. 4 shows a result of a cycle characteristic test of a symmetric cell of comparison example 1.
Fig. 5 shows a result of a cycle characteristic test of a symmetric cell of example embodiment 2.

### DESCRIPTION OF EXEMPLARY EMBODIMENTS

The present embodiment describes details of a negative electrode material, a negative electrode, a lithium secondary battery, and a manufacturing method for a negative electrode material by taking, as an example, a case where the negative electrode material that is used for the negative electrode of the lithium secondary battery containing a non-aqueous electrolyte solution includes at least a first layer and a second layer. In the present embodiment, the first layer contains lithium metal as a negative electrode active material. The second layer is arranged on at least one surface of the first layer. The second layer consists of a compound represented by a general formula MxAy (M is an element selected from a group consisting of Al, In, Mg, Ag, Si, and Sn, and A is an element selected from a group consisting of O, N, P, and F, and 0.3<x/y<3). In addition, the second layer has a thickness of 100 nm or less.

With the present embodiment, the second layer consists of an inorganic material having a specific composition and thickness, and thus it is possible to obtain the second layer that is excellent in electrical conductivity or ionic conductivity. This suppresses an overvoltage of a lithium secondary voltage during charging and discharging. In addition, with the present embodiment, the second layer is arranged on a front surface of the first layer, and thus a direct contact between the lithium metal of the first layer and the non-aqueous electrolyte solution is suppressed. This suppresses a reduction of the non-aqueous electrolyte solution by the lithium metal. As a result, a generation of lithium of a dendrite shape (may be referred to as a Li dendrite) during the charging and discharging of the lithium secondary battery is suppressed. In addition, by suppressing the generation of the Li dendrite, a cycle characteristic of the lithium secondary battery is enhanced. For example, a cycle life of the lithium secondary battery is increased.

As described above, with the present embodiment, a deterioration in battery performance is suppressed, and stability during a battery operation is enhanced. In particular, when the non-aqueous electrolyte solution contains a cyclic carbonate having a fluorine atom, the deterioration in battery performance is greatly suppressed, and the stability during the battery operation is greatly enhanced.

Hereinafter, the invention will be described through embodiments of the invention, but the following embodiments do not limit the invention according to claims. In addition, not all combinations of features described in the embodiments are essential to the solution of the invention.

In the present specification, when a numerical range is expressed as "from A to B", the expression means A or more and B or less. In addition, "substituted or unsubstituted" means "substituted with any substituent, or not substituted with a substituent". A type of substituent described above is not particularly limited unless otherwise stated in the specification. In addition, the number of substituents described above is not particularly limited unless otherwise stated in the specification.

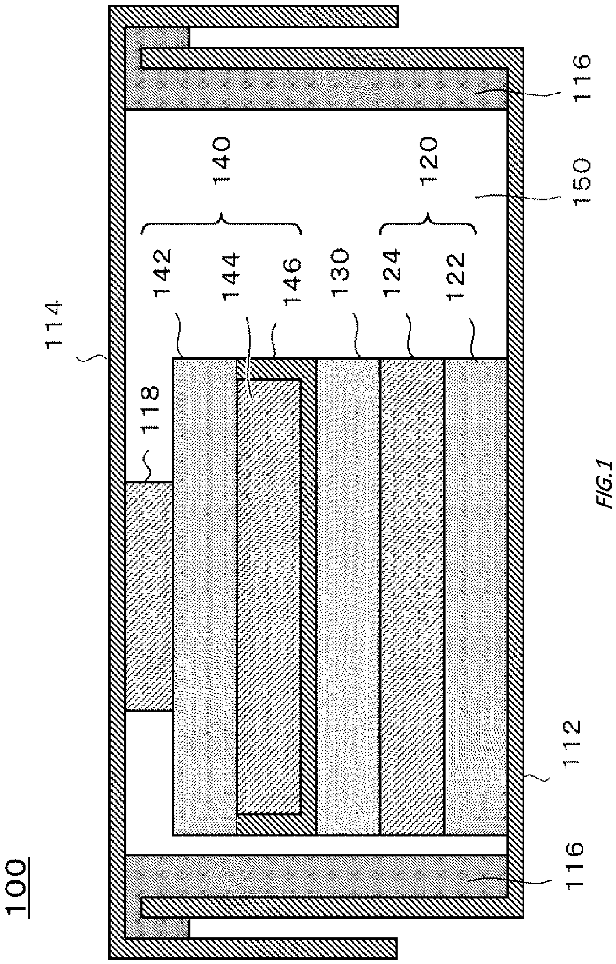

Fig. 1 schematically shows an example of an internal structure of a storage battery 100. Fig. 1 may be an example of a cross sectional view of the storage battery 100. The present embodiment describes details of the storage battery 100 by taking, as an example, a case where the storage battery 100 is a non-aqueous secondary battery of a coin type.

### (Overview of Storage Battery 100)

In the present embodiment, the storage battery 100 stores electrical energy. In addition, the storage battery 100 supplies the stored electrical energy to an outside. It is possible to produce a power source by connecting a plurality of storage batteries 100 in series and/or in parallel.

In the present embodiment, the storage battery 100 is the lithium secondary battery. The storage battery 100 contains the non-aqueous electrolyte solution as an electrolyte. In addition, the storage battery 100 contains, as the negative electrode active material, at least one of the lithium metal (may be referred to as metallic lithium), an alloy of the lithium metal and other metal, or an intermetallic compound of the lithium metal and the other metal (these may collectively be referred to as the term "the lithium metal or the like").

The lithium metal or the like has a very low potential and has a very great theoretical capacity, and thus using the lithium metal or the like, as the negative electrode active material, makes it possible to obtain an excellent secondary battery. In particular, using the lithium metal, as the negative electrode active material, makes it possible to obtain a very excellent secondary battery.

However, for example, when the lithium metal is used as the negative electrode active material, the lithium of a dendrite shape may be generated during the charging and discharging. In a case where a dendrite grows, there is a possibility that a short circuit of a battery occurs. In addition, when an organic solvent that is used as an electrolyte solution is reduced, for example, by the lithium metal, there is a possibility that a reductive degradation product is deposited on the negative electrode. When the reductive degradation product is deposited on the negative electrode, an internal resistance of the battery increases.

With one embodiment of the storage battery 100, by a structure of the negative electrode of the storage battery 100, the generation and/or the growth of the dendrite is suppressed. This realizes stabilization of the negative electrode. With another embodiment of the storage battery 100, by a composition of the non-aqueous electrolyte solution, the stabilization of the negative electrode is realized. With still another embodiment of the storage battery 100, by the structure of the negative electrode of the storage battery 100 and the composition of the non-aqueous electrolyte solution, the stabilization of the negative electrode is realized.

### (Structure of Storage Battery 100)

In the present embodiment, the storage battery 100 includes a positive electrode case 112, a negative electrode case 114, a spacer 116, and a metal spring 118. In addition, the storage battery 100 includes a positive electrode 120, a separator 130, a negative electrode 140, and a non-aqueous electrolyte solution 150. In the present embodiment, the positive electrode 120 has a positive electrode current collector 122 and a positive electrode active material layer 124. In the present embodiment, the negative electrode 140 has a negative electrode current collector 142, a negative electrode active material layer 144, and a coating layer 146.

In the present embodiment, the positive electrode case 112 and the negative electrode case 114 are constituted, for example, by a conductive material having a thin plate shape of a disk shape. In the present embodiment, by assembling the positive electrode case 112 and the negative electrode case 114, a space is formed in the positive electrode case 112 and the negative electrode case 114. In the space formed by the positive electrode case 112 and the negative electrode case 114, the metal spring 118, the positive electrode 120, the separator 130, the negative electrode 140, and the non-aqueous electrolyte solution 150 are housed. The positive electrode 120, the separator 130, and the negative electrode 140 are fixed, by a repulsive force of the metal spring 118, in the positive electrode case 112 and the negative electrode case 114.

In the present embodiment, the spacer 116 holds, for example, a stacked body of the positive electrode 120, the separator 130, and the negative electrode 140 in the space which is formed by the positive electrode case 112 and negative electrode case 114. The spacer 116 may be used for positioning the stacked body of the positive electrode 120, the separator 130, and the negative electrode 140. The spacer 116 may seal a gap which is formed between the positive electrode case 112 and the negative electrode case 114. The spacer 116 may contain an insulating material. In the present embodiment, spacer 116 insulates the positive electrode case 112 and the negative electrode case 114.

It should be noted that in Fig. 1, for a purpose of easily making a drawing and a description, a comparatively large space is formed between the spacer 116, and the stacked body of the positive electrode 120, the separator 130, and the negative electrode 140. However, people skilled in this art who accessed the description in the specification of the present application can understand that it is possible to appropriately adjust a size of the space between the spacer 116, and the stacked body of the positive electrode 120, the separator 130, and the negative electrode 140. In addition, the spacer 116 may fix the stacked body by the spacer 116, and the stacked body of the positive electrode 120, the separator 130, and the negative electrode 140 being in contact with each other.

In the present embodiment, a material of the metal spring 118 only needs to be a conductive substance, and a type thereof is not particularly limited. A shape and a size of the metal spring 118 are not particularly limited. The metal spring 118 may be a washer.

### (Positive Electrode)

In the present embodiment, the positive electrode current collector 122 is configured to hold the positive electrode active material layer 124. A material of the positive electrode current collector 122 only needs to be an electronic conductor that is chemically stable in the storage battery 100, and a type thereof is not particularly limited. Examples of the material of the positive electrode current collector 122 include aluminum, stainless steel, nickel, titanium, an alloy of these, or the like. Examples of a shape of the positive electrode current collector 122 include foil, mesh, punched metal, expanded metal, or the like. A thickness of the positive electrode current collector 122 is not particularly limited, but is preferably from 5 µm to 200 µm. The thickness of the positive electrode current collector 122 may be from 6 µm to 20 µm.

In the present embodiment, the positive electrode active material layer 124 is formed on at least one surface of the positive electrode current collector 122. A thickness of the positive electrode active material layer 124 may be from 1 µm to 300 µm, or may be from 2 µm to 200 µm per side of the positive electrode current collector 122. The positive electrode active material layer 124 contains, for example, a positive electrode active material and a binding agent (may be referred to as a binder). The positive electrode active material layer 124 may contain a conductive auxiliary agent.

In one embodiment, the positive electrode active material layer 124 is formed by applying paste containing a material constituting the positive electrode active material layer 124, and the organic solvent, on at least one surface of the positive electrode current collector 122, and drying the paste. A type of the organic solvent is not particularly limited, and examples of the organic solvent include N-methylpyrrolidone (NMP) or the like. In another embodiment, the positive electrode active material layer 124 is formed by mixing the materials that constitute the positive electrode active material layer 124 and molding the mixture into a sheet shape, to press and bond the mixture of the sheet shape to at least one surface of the positive electrode current collector 122.

The positive electrode active material only needs to be a material that is capable of intercalation and deintercalation of a lithium ion and that has a potential higher than that of a metallic lithium negative electrode which is the negative electrode active material, and for example, transition metal oxides of an insertion type such as lithium layered oxides, olivines, and spinels are used. Examples of the positive electrode active material include: (i) layered oxides such as LiMnO₂, LiNiO₂, LiCoO₂, Li(MnₓNi₁₋ₓ)O₂, Li(MnₓCo₁₋ₓ)O₂, Li(Ni_{y}Co_{1-y})O₂, and Li(MnₓNi_{y}Co_{1-x-y})O₂; (ii) solid solutions such as Li₂MnO₃-LiNiO₂, Li₂MnO₃-LiCoO₂, and Li₂MnO₃-Li(Ni_{y}Co_{1-y})O₂; (iii) silicates such as Li₂MnSiO₄, Li₂NiSiO₄, Li₂CoSiO₄, Li₂(MnₓNi₁₋ₓ)SiO₄, Li₂(MnₓCo₁₋ₓ)SiO₄, Li₂(Ni_{y}Co_{1-y})SiO₄, and Li₂(MnₓNi_{y}Co_{1-x-y})SiO₄; (iv) borates such as LiMnBO₃, LiNiBO₃, LiCoBO₃, Li(MnₓNi₁₋ₓ)BO₃, Li(MnₓCo₁₋ₓ)BO₃, Li(Ni_{y}Co_{1-y})BO₃, and Li(MnₓNi_{y}Co_{1-x-y})BO₃; (v) V₂O₅; (vi) LiV₃O_{g}; (vii) MnO; or the like. In the formulas described above, 0<x<1, 0<y<1, and 0<x+y<1. These positive electrode active materials may be used alone, or two or more positive electrode active materials may be combined to be used.

As the positive electrode active material, a positive electrode active material of a conversion type with a high capacity may be used. Examples of the positive electrode active material of a conversion type with a high capacity include sulfur, a sulfur compound, ferrous fluoride, the transition metal oxide, or the like. The positive electrode active material of a conversion type does not contain lithium in an initial state. Therefore, by combining the positive electrode containing the positive electrode active material of a conversion type and the negative electrode containing the lithium metal as the negative electrode active material, an energy density of a non-aqueous electrolyte secondary battery is greatly enhanced.

In the present embodiment, the binding agent binds the materials (for example, the positive electrode active material, conductive auxiliary agent, or the like) constituting the positive electrode active material layer 124, and holds an electrode shape of the positive electrode 120. The binding agent only needs to be chemically stable in the storage battery 100, and a type thereof is not particularly limited. As the binding agent, a thermoplastic resin may be used, or a thermosetting resin may be used. Examples of the binding agent include polyethylene, polypropylene, polyvinylidene fluoride (PVDF), polytetrafluoroethylene (PTFE), polyacrylic acid, styrene-butadiene rubber, or the like.

In the present embodiment, the conductive auxiliary agent reduces a resistance of the positive electrode 120. The conductive auxiliary agent only needs to be chemically stable in the storage battery 100 and to have desired electronic conductivity, and a type thereof is not particularly limited. As the conductive auxiliary agent, an inorganic material may be used, or an organic material may be used. Examples of the conductive auxiliary agent include a carbon material. Examples of the carbon material include graphite, carbon black (for example, acetylene black, ketjen black, or the like), coke, amorphous carbon, carbon fibers, carbon nanotubes, graphene, or the like. The conductive auxiliary agent may be used alone, or two or more conductive auxiliary agents may be combined to be used.

### (Separator)

In the present embodiment, the separator 130 separates the positive electrode 120 and the negative electrode 140. The separator 130 secures the ionic conductivity between the positive electrode 120 and the negative electrode 140, for example, by holding the electrolyte solution. Examples of a material of the separator 130 include polyethylene, polypropylene, ethylene-propylene copolymer, glass, or a composite body of these.

Examples of a shape of the separator 130 include a microporous film, a nonwoven fabric, a filter, or the like. The separator 130 may be a stacked body of the films of these, or the like. A thickness of the separator 130 is not particularly limited, but is preferably from 10 µm to 50 µm. An opening ratio of the separator 130 is not particularly limited, but is preferably from 30% to 70%.

### (Negative Electrode)

In the present embodiment, the negative electrode current collector 142 is configured to hold the negative electrode active material layer 144. For the negative electrode current collector 142, a material that does not react with lithium is used. Examples of the material of the negative electrode current collector 142 include aluminum, stainless steel, nickel, titanium, an alloy of these, or the like. The negative electrode current collector 142 may include a support layer of resin, and a metal layer arranged on a front surface of the support layer. Examples of the resin described above include polyethylene, polypropylene, polyethylene terephthalate, polyimide, or the like. The metal layer described above may be a layer consisting of copper, aluminum, stainless steel, nickel, titanium, or an alloy of these. The metal layer described above may include a layer consisting of copper, aluminum, stainless steel, nickel, titanium, or an alloy of these. The metal layer may be foil, or may be a plated layer.

Examples of a shape of the negative electrode current collector 142 include foil, mesh, punched metal, expanded metal, or the like. A thickness of the negative electrode current collector 142 is not particularly limited, but may be from 5 µm to 200 µm. The thickness of the negative electrode current collector 142 is preferably from 6 µm to 20 µm.

In the present embodiment, the negative electrode active material layer 144 is formed on at least one surface of the negative electrode current collector 142. The negative electrode active material layer 144 may be formed on only one surface of the negative electrode current collector 142 of a sheet shape, a film shape, or a foil shape, or may be formed on both surfaces of the negative electrode current collector 142 described above. A thickness of the negative electrode active material layer 144 may be from 1 µm to 200 µm, or may be from 4 µm to 100 µm per side of the negative electrode current collector 142.

In the present embodiment, the negative electrode active material layer 144 contains, as the negative electrode active material, at least one of the lithium metal (may be referred to as metallic lithium), an alloy of the lithium metal and other metal, or an intermetallic compound of the lithium metal and the other metal. The negative electrode active material layer 144 may be a layer consisting of the lithium or the like described above. The negative electrode active material layer 144 may contain the lithium metal as the negative electrode active material. The negative electrode active material layer 144 may be a layer consisting of the lithium metal.

The negative electrode active material layer 144 may be lithium metal foil. A thickness of the lithium metal foil may be from 1 µm to 200 µm, or may be from 2 µm to 100 µm, and is preferably from 4 µm to 50 µm. The thickness and/or a mass of the lithium metal foil may be determined according to a content of the positive electrode active material in the positive electrode active material layer 124.

In one embodiment, the negative electrode active material layer 144 is formed by pressing and bonding, to a front surface of at least one surface of the negative electrode current collector 142, a material which constitutes the negative electrode active material layer 144 and which has a sheet shape, a film shape, or a foil shape. In another embodiment, the negative electrode active material layer 144 is formed by depositing a material constituting the negative electrode active material layer 144 on a front surface of at least one surface of the negative electrode current collector 142, by (i) a physical vapor deposition method (PVD method) such as sputtering, deposition, and ion plating, (ii) a chemical vapor deposition method (CVD method), (iii) an atomic layer deposition method (ALD method), or the like.

In the present embodiment, the coating layer 146 is arranged on at least one surface of the negative electrode active material layer 144. In one embodiment, of two surfaces of the negative electrode active material layer 144 of a sheet shape, a film shape, or a foil shape, the coating layer 146 is arranged on a surface on an opposite side of a surface in contact with the negative electrode current collector 142. Of two surfaces of the negative electrode active material layer 144 of a sheet shape, a film shape, or a foil shape, in the surface in contact with the negative electrode current collector 142, the coating layer 146 may not be arranged.

In this case, the coating layer 146 may be arranged to entirely cover the negative electrode active material layer 144 arranged in contact with the negative electrode current collector 142. For example, as shown in Fig. 1, the coating layer 146 is arranged such that a part of the coating layer 146 is in contact with the negative electrode current collector 142. A size of the coating layer 146 may be greater than a size of the negative electrode active material layer 144. This makes it possible for the coating layer 146 to entirely cover the negative electrode active material layer 144 arranged in contact with the negative electrode current collector 142.

In another embodiment, the coating layer 146 is arranged on both of two main surfaces of the negative electrode active material layer 144 of a sheet shape, a film shape, or a foil shape. In this case, the coating layer 146 is interposed between the negative electrode current collector 142 and the negative electrode active material layer 144. This makes it possible for the coating layer 146 to entirely cover the negative electrode active material layer 144 arranged above the negative electrode current collector 142.

In the present embodiment, the coating layer 146 consists of a compound represented by a general formula MₓA_{y} (M is an element selected from a group consisting of Al, In, Mg, Ag, Si, and Sn, and A is an element selected from a group consisting of O, N, P, and F, and 0.3<x/y<3). By the coating layer 146 consisting of the compound represented by the general formula MₓA_{y}, it is possible to obtain the coating layer 146 that is excellent in electrical conductivity or ionic conductivity.

With the present embodiment, by the coating layer 146 containing Al, In, Mg, Ag, Si, or Sn, the generation and/or the growth of the Li dendrite is suppressed. In addition, as will be described below, the non-aqueous electrolyte solution 150 may contain an organic compound having a fluorine atom, as a liquid organic solvent. In this case, by an interaction between Al, In, Mg, Ag, Si, or Sn contained in the compound represented by the general formula MₓA_{y} described above, and the fluorine atom contained in the organic compound that is used as the organic solvent of the non-aqueous electrolyte solution 150, the generation and/or the growth of the Li dendrites is more effectively suppressed. A mechanism thereof is not clear, but is presumed to be due to a favorable formation of a film that is effective in suppressing the generation and/or the growth of the Li dendrite, by the interaction between the compound represented by the general formula MₓA_{y}, and the organic compound having the fluorine atom.

The coating layer 146 preferably contains Al and/or In. That is, M in the general formula is preferably an element selected from a group consisting of Al and In. By the coating layer 146 containing Al and/or In, the generation and/or the growth of the lithium of a dendrite shape is effectively suppressed.

The coating layer 146 preferably contains an oxide or a nitride. That is, A in the general formula is preferably an element selected from a group consisting of O and N. When the compound represented by the general formula MₓA_{y} is the oxide, it is possible to obtain the coating layer 146 that is excellent in strength. As a result, it is possible to reduce a thickness of the coating layer 146, and thus it is possible to obtain the coating layer 146 that is excellent in electrical conductivity or ionic conductivity, and in addition, when the compound represented by the general formula MₓA_{y} is the nitride, it is possible to obtain the coating layer 146 that is excellent in conductivity of the lithium ion.

The coating layer 146 preferably contains at least one of Al₂O₃, In₂O₃, AIN, or InN. The coating layer 146 is preferably a layer consisting of Al₂O₃, In₂O₃, AIN, or InN. This makes it possible to obtain the coating layer 146 that is excellent in electrical conductivity or ionic conductivity and that can effectively suppress the generation and/or the growth of the lithium of a dendrite shape.

In the present embodiment, the coating layer 146 has a thickness of 100 nm or less. The thickness of the coating layer 146 may be less than 50 nm, may be 30 nm or less, may be 20 nm or less, or may be 10 nm or less. This makes it possible to obtain the coating layer 146 that is excellent in electrical conductivity or ionic conductivity.

For example, the coating layer 146 is formed by depositing a material constituting the coating layer 146 on a front surface of at least one surface of the negative electrode active material layer 144, by (i) the physical vapor deposition method (PVD method) such as sputtering, deposition, ion plating, (ii) the chemical vapor deposition method (CVD method), (iii) the atomic layer deposition method (ALD method), or the like. It should be noted that a producing method for the coating layer 146 only needs to form the coating layer 146 having the thickness mentioned above, and is not particularly limited.

when the electrical conductivity or the ionic conductivity of the coating layer 146 is low, the coating layer 146 itself acts as a resistive layer, and a great overvoltage occurs during the charging and discharging. As a result, the performance of the storage battery 100 is degraded. With the present embodiment, the coating layer 146 has a specific composition and thickness, and the coating layer 146 has excellent electrical conductivity or ionic conductivity. As a result, an occurrence of a great overvoltage during the charging and discharging of the storage battery 100 is prevented.

An element constituting the compound that is represented by the general formula MₓA_{y} and that is contained in the coating layer 146 may react with the lithium contained in the storage battery 100 during a charging and discharging process of the storage battery 100. As a result, it is possible for the negative electrode 140 to contain a reaction product between the lithium, and the element constituting the compound represented by the general formula MₓA_{y}. The coating layer 146 may contain the reaction product between the lithium, and the element constituting the compound represented by the general formula MₓA_{y}. The reaction product described above may form a film. The reaction product described above forms, for example, the film on a front surface of the coating layer 146.

In one embodiment, during the charging and discharging process of the storage battery 100, it is possible to generate an alloy of the lithium contained in the storage battery 100, and the element constituting the compound represented by the general formula MₓA_{y}. It should be noted that the alloy may be a solid solution, or may be an intermetallic compound. The alloy described above may be an alloy of the lithium, and the element represented by M contained in the compound represented by the general formula MₓA_{y}. In this case, for example, it is possible for the negative electrode 140 to contain the alloy of the lithium, and the element represented by M contained in the compound represented by the general formula MₓA_{y}, after the storage battery 100 is charged and discharged at least once. The coating layer 146 may contain the alloy of the lithium, and the element represented by M contained in the compound represented by the general formula MₓA_{y}. The alloy described above may form a film.

In another embodiment, when the compound of the coating layer 146 which is represented by the general formula MₓA_{y} contains nitrogen as an element represented by A, it is possible to generate lithium nitride during the charging and discharging process of the storage battery 100. In this case, for example, it is possible for the negative electrode 140 to contain the lithium nitride, after the storage battery 100 is charged and discharged at least once. The coating layer 146 may contain the lithium nitride. The lithium nitride described above may form a film.

### (Electrolyte)

In the present embodiment, the non-aqueous electrolyte solution 150 realizes ionic conduction between the positive electrode active material and the negative electrode active material, via the electrolyte that is contained in the non-aqueous electrolyte solution 150. As the non-aqueous electrolyte solution 150, it is possible to use a well known organic electrolyte solution. The non-aqueous electrolyte solution 150 includes, for example, a lithium salt or sodium salt as the electrolyte, and a polar solvent. The polar solvent may be the organic solvent.

The lithium salt described above only needs to dissociate in a solvent to form the lithium ion, and be less likely to cause a side reaction such as decomposition in a voltage range for a use for a battery, and a type thereof is not particularly limited. Examples of the lithium salt include: (i) inorganic lithium salts such as LiClO₄, LiPF₆, LiBF₄, LiAsF₆, and LiSbF6; ii) organic lithium salts such as LiCF₃SO₃, LiCF₃CO₂, Li₂C₂F₄(SO₃)₂, LiN(FSO₂)₂, LiN(CF₃SO₂)₂, LiC(CF₃SO2)₃, LiCₙF₂ₙ₊₁SO₃ (n is an integer of 2 or more), and LiN(R_{f}OSO₂)₂ (R_{f} is a substituted or unsubstituted fluoroalkyl group); or the like. LiN(FSO₂)₂ may be referred to as LiFSI. LiN(CF₃SO₂)₂ may be referred to as LiTFSI.

The lithium salt described above may be used alone, or two or more lithium salts may be combined to be used. As the lithium salt, one or two or more of lithium hexafluorophosphate (LiPF₆), lithium bisfluorosulfonylimide (LiFSI), lithium bistrifluoromethanesulfonylimide (LiTFSI), and LiBF₄ (lithium borofluoride) are preferably used.

The organic solvent described above only needs to dissolve the lithium salt mentioned above, and be less likely to cause the side reaction such as decomposition in a voltage range for a use for a battery, and a type thereof is not particularly limited. Examples of the organic solvent include (i) cyclic carbonates such as ethylene carbonate, propylene carbonate, and butylene carbonate; (ii) chain carbonates such as dimethyl carbonate, diethyl carbonate, and methyl ethyl carbonate; (iii) chain esters such as methyl propionate; (iv) cyclic esters such as γ-butyrolactone; (v) chain ethers such as dimethoxyethane, diethyl ether, 1,3-dioxolane, diglyme, triglyme and tetraglyme; (vi) cyclic ethers such as dioxane, tetrahydrofuran, and 2-methyltetrahydrofuran; (vii) nitriles such as acetonitrile, propionitrile, and methoxypropionitrile; (viii) sulfite esters such as ethylene glycol sulfite; or the like.

The organic solvent described above may be used alone, or two or more lithium salts may be combined to be used. As the organic solvent, one or two or more of carbonate compounds and ether compounds are preferably used. Examples of the carbonate compound described above include propylene carbonate, ethylene carbonate (EC), dimethyl carbonate (DMC), ethyl methyl carbonate (EMC), diethyl carbonate (DEC), fluoroethylene carbonate (FEC), fluoroethylene methyl carbonate (FEMC), or the like. Examples of the above ether compound include 1,2-dimethoxyethane (DME) or the like.

The carbonate compound and/or ether compound described above are more likely to be subjected to reductive degradation by the lithium metal of the negative electrode active material layer 144 in comparison to another organic solvent. With the negative electrode 140 according to the present embodiment, the lithium metal of the negative electrode active material layer 144 is covered with the coating layer 146, and thus even when the non-aqueous electrolyte solution 150 contains the carbonate compound and the ether compound, the reductive degradation of the non-aqueous electrolyte solution 150 by the lithium metal is suppressed.

The organic solvent described above may contain the organic compound having a fluorine atom. The organic solvent described above preferably contains the cyclic carbonate having a fluorine atom. The organic solvent preferably contains one or two or more of the various organic solvents mentioned above, and the cyclic carbonate having a fluorine atom. Examples of the cyclic carbonate having a fluorine atom include fluorinated ethylene carbonate. Examples of the fluorinated ethylene carbonate include fluoroethylene carbonate (FEC), difluoroethylene carbonate (DFEC), fluoroethylene methyl carbonate (FEMC), and the like. Other examples of the organic compound having a fluorine atom include fluorinated ether, fluorinated glyme or the like. The organic solvent described above preferably contains one or two or more of the various organic solvents mentioned above, and the fluorinated ethylene carbonate.

A ratio of the cyclic carbonate having a fluorine atom to a whole of the organic solvent contained in the non-aqueous electrolyte solution 150 is preferably 20 mol % or more. The ratio of the cyclic carbonate having a fluorine atom to the whole of the organic solvent that is used in the non-aqueous electrolyte solution 150 may be 20 mol% or more and 80% or less, may be 25 mol% or more and 70 mol% or less, or may be 30 mol % or more and 60 mol % or less.

A ratio of the cyclic carbonate having a fluorine atom to a whole of the non-aqueous electrolyte solution 150 may be 20 mol % or more. For example, a ratio of a value of the number of moles of the cyclic carbonate having a fluorine atom, to a value of a total number of moles of the electrolyte and the organic solvent that is contained in the non-aqueous electrolyte solution 150, is 20 mol % or more. The ratio described above may be 20 mol % or more and 80 mol % or less, may be 25 mol % or more and 70 mol % or less, or may be 30 mol % or more and 60 mol % or less. When the non-aqueous electrolyte solution 150 contains the cyclic carbonate having a plurality of types of fluorine atoms, a ratio of a value of a total number of moles of the cyclic carbonate having the plurality of types of fluorine atom, to a value of a total number of moles of the electrolyte and the organic solvent that is used in the non-aqueous electrolyte solution 150, may be 20 mol % or more. The ratio described above may be 20 mol % or more and 80 mol % or less, may be 25 mol % or more and 70 mol % or less, or may be 30 mol % or more and 60 mol % or less.

By the non-aqueous electrolyte solution 150 containing the cyclic carbonate having a fluorine atom as at least a part of a main organic solvent, the reductive degradation of the carbonate compound and the ether compound described above that are contained in the organic solvent, is suppressed. In particular, the fluorinated ethylene carbonate contains highly electronegative fluorine atoms. Therefore, by the organic solvent containing the fluorinated ethylene carbonate, the reductive degradation of the carbonate compound and the ether compound that are contained in the organic solvent is greatly suppressed.

In one embodiment of the non-aqueous electrolyte solution 150, LiPF₆ is used as the electrolyte, and a mixed solvent of ethylene carbonate (EC) and diethyl carbonate (DEC) is used as the polar solvent. The cyclic carbonate having a fluorine atom may further be added to the mixed solvent described above. For example, the fluorinated ethylene carbonate is added to the mixed solvent described above.

In another embodiment of the non-aqueous electrolyte solution 150, LiTFSI is used as the electrolyte, and the mixed solvent of ethylene carbonate (EC) and diethyl carbonate (DEC) is used as the polar solvent. The cyclic carbonate having a fluorine atom may further be added to the mixed solvent described above. For example, the fluorinated ethylene carbonate is added to the mixed solvent described above.

In still another embodiment of the non-aqueous electrolyte solution 150, LiBF₄ is used as the electrolyte, and a mixed solvent of propylene carbonate (PC) and ethyl methyl carbonate (EMC) is used as the polar solvent. The cyclic carbonate having a fluorine atom may further be added to the mixed solvent described above. For example, the fluorinated ethylene carbonate is added to the mixed solvent described above.

A concentration of the lithium salt in the non-aqueous electrolyte solution 150 is not particularly limited, and may be in a range from 0.1 mol/L to 5.0 mol/L. The concentration of the lithium salt may be in a range from 0.5 mol/L to 4.0 mol/L, or may be in a range from 0.7 mol/L to 1.5 mol/L.

As mentioned above, with the present embodiment, the negative electrode 140 includes the stacked body of the negative electrode active material layer 144 containing the lithium metal, and the coating layer 146 consisting of the compound represented by the general formula MₓA_{y}. This suppresses a reduction of the non-aqueous electrolyte solution by the lithium metal. In addition, the generation of the lithium of a dendrite shape is suppressed during the charging and discharging of the lithium secondary battery. An effect of the negative electrode 140 including the stacked body of the negative electrode active material layer 144 and the coating layer 146 is remarkably exhibited, in particular, when the non-aqueous electrolyte solution 150 contains propylene carbonate, ethylene carbonate (EC), dimethyl carbonate (DMC), ethyl methyl carbonate (EMC), diethyl carbonate (DEC), fluoroethylene carbonate (FEC), difluoroethylene carbonate (DFEC), fluoroethylene methyl carbonate (FEMC), or 1,2-dimethoxyethane (DME).

The reduction of the non-aqueous electrolyte solution by the lithium metal is effectively suppressed, when (a) the negative electrode 140 includes the stacked body of the negative electrode active material layer 144 and the coating layer 146; and (b) the non-aqueous electrolyte solution 150 is a mixed solvent of (i) one or two or more compounds selected from a group consisting of propylene carbonate, ethylene carbonate (EC), dimethyl carbonate (DMC), ethyl methyl carbonate (EMC), diethyl carbonate (DEC), fluoroethylene carbonate (FEC), difluoroethylene carbonate (DFEC), fluoroethylene methyl carbonate (FEMC), and 1,2-dimethoxyethane (DME), and (ii) the cyclic carbonate having a fluorine atom. In addition, the generation of the lithium of a dendrite shape is effectively suppressed during the charging and discharging of the lithium secondary battery.

The storage battery 100 may be an example of the lithium secondary battery. The negative electrode active material layer 144 may be an example of the first layer. The coating layer 146 may be an example of the second layer. The stacked body of the first layer and the second layer may be an example of the negative electrode material.

### (Example of Another Embodiment)

The present embodiment has described the details of the storage battery 100 by taking, as an example, the case where the storage battery 100 is the secondary battery of a coin type. However, a type, a structure, or the like of the storage battery 100 is not limited to the present embodiment. In another embodiment, the storage battery 100 may be a cylindrical battery including a wound electrode body in which the positive electrode, the separator and the negative electrode are wound in a spiral shape. In still another embodiment, the storage battery 100 may be a laminated battery in which a stacked electrode body obtained by alternately stacking the positive electrode and the negative electrode across the separator, is sealed with a laminate.

The present embodiment has described the details of the storage battery 100 by taking, as an example, the case where the negative electrode 140 has the negative electrode current collector 142 and the negative electrode active material layer 144. However, the negative electrode of the storage battery 100 is not limited to the present embodiment. In another embodiment, for example, when the lithium metal foil is used as the negative electrode active material layer 144, the storage battery 100 may not include the negative electrode current collector 142.

The present embodiment has described an example of the storage battery 100 by taking, as an example, the case where the non-aqueous electrolyte solution 150 is used as the electrolyte of the storage battery 100. however, the electrolyte of the storage battery 100 is not limited to the present embodiment. In another embodiment, a gel electrolyte may be used as the electrolyte of the storage battery 100. For example, it is possible for the gel electrolyte to be obtained by adding a well known gelling agent to the non-aqueous electrolyte solution 150 mentioned above. In still another embodiment, a well known ionic liquid may be used as the electrolyte of the storage battery 100.

### (Manufacturing Method for Storage Battery 100)

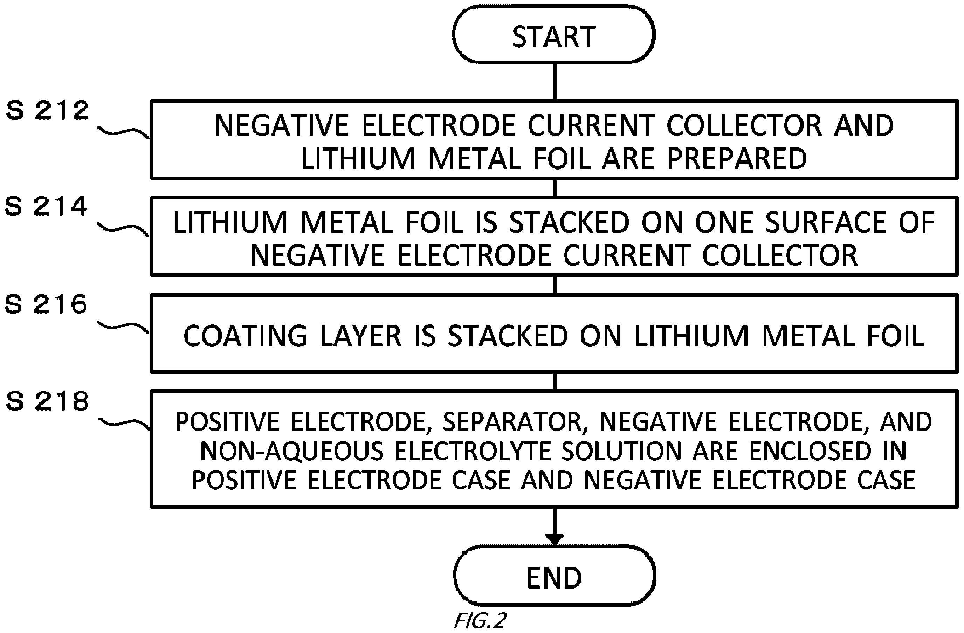

Fig. 2 schematically shows an example of a manufacturing method for the storage battery 100. With the present embodiment, first, in step 212 (the step may be abbreviated as S), for example, the negative electrode current collector 142 of a sheet shape, and the lithium metal foil as the negative electrode active material layer 144 are prepared. Then, in S214, the negative electrode current collector 142 and the lithium metal foil are stacked. For example, the lithium metal foil is pressed and bonded to the front surface of at least one surface of the negative electrode current collector 142.

Then, in S216, in the lithium metal foil that is pressed and bonded to the negative electrode current collector 142, the coating layer 146 having a thickness of 100 nm or less is stacked on at least a part of a front surface of a surface on an opposite side of a surface of the lithium metal foil in contact with the negative electrode current collector 142. The coating layer 146 is formed, for example, by the physical vapor deposition method (PVD method), the chemical vapor deposition method (CVD method), or the atomic layer deposition method (ALD method). At this time, the coating layer 146 is formed such that the coating layer 146 entirely covers the front surface of the lithium metal foil.

Then, in S218, the storage battery 100 is assembled. Specifically, first, the positive electrode 120, the separator 130, the negative electrode 140, the spacer 116, and the metal spring 118 are arranged in the positive electrode case 112 and the negative electrode case 114. In addition, the non-aqueous electrolyte solution 150 is injected into the positive electrode case 112 and the negative electrode case 114. Subsequently, the positive electrode case 112 and the negative electrode case 114 are sealed, and it is possible to obtain the storage battery 100.

### (Example of Another Embodiment)

In the present embodiment, the lithium metal foil is pressed and bonded to the negative electrode current collector 142, and then the coating layer 146 is formed on the front surface of the lithium metal foil. However, a procedure for producing the negative electrode 140 is not limited to the present embodiment. With another embodiment, the coating layer 146 is formed on the front surface of at least one surface of the lithium metal foil, and then the lithium metal foil in which the coating layer 146 is formed is pressed and bonded to the negative electrode current collector 142.

### (Example Embodiment)

For a purpose of more specifically describing the storage battery 100, the details of the storage battery 100 are described in the following example embodiments. In the example embodiments below, a "symmetric cell" is used to evaluate the performance of the negative electrode. In the symmetric cell, two equivalent electrodes having materials, masses and thicknesses which are equal to each other, are arranged symmetrically in the cell. However, various modifications or improvements may be made to the example embodiments below, and the storage battery 100 is not limited to the example embodiments below.

### (Example Embodiment 1)

First, the negative electrode was produced by the following procedure. Cu foil having a thickness of 10 µm was prepared as the negative electrode current collector 142. In addition, the lithium metal foil having a thickness of 20 µm was prepared as the negative electrode active material layer 144. Then, the lithium metal foil was pressed and bonded to a front surface of one surface of the Cu foil. Subsequently, Al₂O₃ was deposited on the front surface of the lithium metal foil by the PVD method to form an Al₂O₃ layer as the coating layer 146. A thickness of the Al₂O₃ layer was 10 nm. This made it possible to obtain the negative electrode in which a Cu current collector, a Li layer, and an Al₂O₃ layer were stacked in this order.

Then, the positive electrode was produced by a procedure similar to that for the negative electrode. This made it possible to obtain the positive electrode in which the Cu current collector, the Li layer, and the Al₂O₃ layer were stacked in this order.

In addition, polyethylene having a thickness of 16 µm was prepared as the separator 130. In addition, the non-aqueous electrolyte solution containing a mixed solvent of ethyl methyl carbonate and fluorinated ethylene carbonate, and lithium hexafluorophosphate was prepared. Lithium hexafluorophosphate: fluorinated ethylene carbonate: ethyl methyl carbonate was 12.6: 18.0: 69.4 (% by volume). A mol % of the fluorinated ethylene carbonate to a whole of the mixed solvent was 20 mol % or more. A battery of a coin type was produced by using the positive electrode, the negative electrode, the separator, and the non-aqueous electrolyte solution that are mentioned above. This produced a symmetric cell for an evaluation.

### (Example Embodiment 2)

The battery of a coin type was produced by a procedure similar to that of example embodiment 1 other than lithium hexafluorophosphate: fluorinated ethylene carbonate: ethyl methyl carbonate in the non-aqueous electrolyte solution was 12.8: 22.1: 65.1 (% by volume). This produced a symmetric cell for an evaluation.

### (Comparison Example 1)

First, the negative electrode was produced by the following procedure. The Cu foil having a thickness of 10 µm was prepared as the negative electrode current collector 142. In addition, the lithium metal foil having a thickness of 20 µm was prepared as the negative electrode active material layer 144. This made it possible to obtain the negative electrode in which the Cu current collector and the Li layer were stacked in this order.

Then, the positive electrode was produced by a procedure similar to that for the negative electrode. This made it possible to obtain the positive electrode in which the Cu current collector and the Li layer were stacked in this order. In addition, a separator and a non-electrolyte solution similar to those in example embodiment 1 were prepared. The battery of a coin type was produced in a manner similar to that of example embodiment 1. This produced a symmetric cell for an evaluation.

### (Test Example 1)

By using the symmetric cell for an evaluation produced in example embodiment 1, the cycle characteristic of the symmetric cell was evaluated. Specifically, the charging and the discharging were repeated 250 cycles at a constant current, and voltage values during the charging and discharging were recorded. A charging time per cycle was one hour and a discharging time per cycle was one hour. Conditions for the charging were a temperature of 23 [°C], a current density of 1 [mA/cm²], and a current value of 0.2 [mA]. Conditions for the discharging were a temperature of 23 [°C], a current density of 1 [mA/cm²], and a current value of 0.2 [mA].

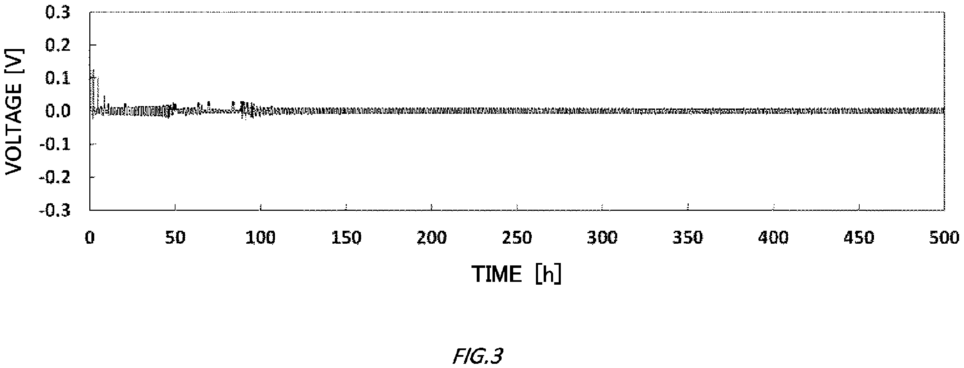

### Fig. 3 shows a result of test example 1

In example embodiment 1, two equivalent electrodes having materials, masses, and thicknesses which are equal to each other, are used as the positive electrode and the negative electrode. Therefore, an operating voltage is 0 V, and charging and discharging curves have substantially symmetric shapes in a range where the electrodes are normal. In test example 1, it can be seen that even after 500 hours have passed, the overvoltage is suppressed and the negative electrode is stable.

### (Test Example 2)

By using the symmetric cell for an evaluation produced in comparison example 1, the cycle characteristic of the symmetric cell was evaluated. Specifically, the charging and the discharging were repeated 250 cycles at a constant current, and the voltage values during the charging and discharging were recorded. The charging time per cycle was one hour and the discharging time per cycle was one hour. The condition during the charging and the condition during the discharging were similar to those of test example 1.

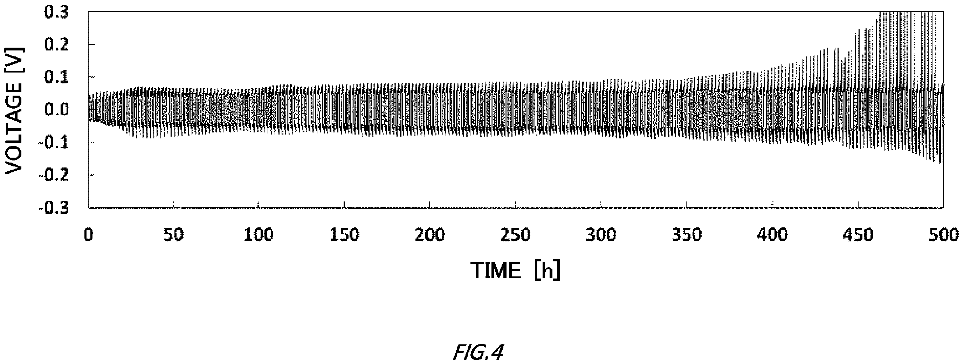

Fig. 4 shows a result of test example 2. In test example 2, it can be seen that the overvoltage occurred at a time point when 500 hours passed.

### (Test Example 3)

By using the symmetric cell for an evaluation produced in example embodiment 2, the cycle characteristic of the symmetric cell was evaluated. Specifically, the charging and the discharging were repeated 50 cycles at a constant current, and voltage values during the charging and discharging were recorded. The charging time per cycle was one hour and the discharging time per cycle was one hour. The condition during the charging and the condition during the discharging were similar to those of test example 1.

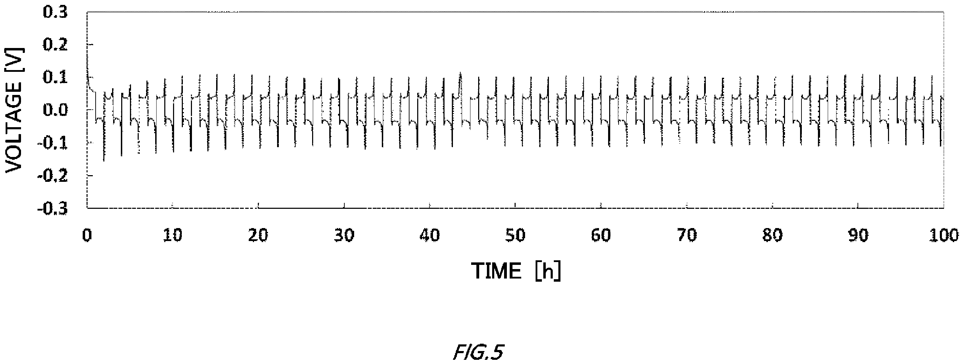

Fig. 5 shows a result of a cycle characteristic test. In test example 3, it can be seen that even after 100 hours have passed, the overvoltage is suppressed and the negative electrode is stable.

As described above, the stabilization of the negative electrode was realized by forming the Al₂O₃ layer of 10 nm on the front surface of the lithium metal layer. As mentioned above, In, Mg, Ag, Si, and Sn, also make it possible to suppress the generation and/or the growth of the lithium of a dendrite shape, similarly to Al. In addition, oxides, nitrides, fluorides, and phosphides of the metal make it possible to form the coating layer that is excellent in conductivity or ionic conductivity, similarly to the Al₂O₃ layer. Accordingly, with the present disclosure, it is proven that by the negative electrode including the layer consisting of the compound represented by the general formula MₓA_{y}, the deterioration in the performance of the lithium secondary battery is suppressed, and the stability during the battery operation is enhanced.

While the embodiments of the present invention have been described, the technical scope of the present invention is not limited to the above-described embodiments. It is apparent to persons skilled in the art that various alterations or improvements can be made to the above-described embodiments. It is also apparent from the scope of the claims that the embodiments added with such alterations or improvements can be included in the technical scope of the present invention.

The operations, procedures, steps, stages etc. of every processing performed by an apparatus, system, program, and method shown in the claims, specification, or diagrams can be performed in any order as long as the order is not indicated by "prior to," "before," or the like and as long as the output from a previous processing is not used in a later processing. Even if the operation flow is described with phrases such as "first" or "next" in the claims, specification, or diagrams, they do not necessarily mean that the flow must be performed in this order.

### EXPLANATION OF REFERENCES

100: storage battery, 112: positive electrode case, 114: negative electrode case, 116: spacer, 118: metal spring, 120: positive electrode, 122: positive electrode current collector, 124: positive electrode active material layer, 130: separator, 140: negative electrode, 142: negative electrode current collector, 144: negative electrode active material layer, 146: coating layer, 150: non-aqueous electrolyte solution.

## Claims

1. A negative electrode material that is used for a negative electrode of a lithium secondary battery containing a non-aqueous electrolyte solution, the negative electrode material comprising:
a first layer that contains lithium metal as a negative electrode active material; and
a second layer that is arranged on at least one surface of the first layer, wherein the second layer
consists of a compound represented by a general formula MₓA_{y} (M is an element selected from a group consisting of Al, In, Mg, Ag, Si, and Sn, and A is an element selected from a group consisting of O, N, P, and F, and 0.3<x/y<3), and
has a thickness of 100 nm or less.

2. The negative electrode material according to claim 1, wherein
the second layer has a thickness of 10 nm or less.

3. The negative electrode material according to claim 1 or 2, wherein
A is an element selected from a group consisting of O and N.

4. A negative electrode comprising:
the negative electrode material according to any one of claims 1 to 3; and
a negative electrode current collector that is configured to hold the negative electrode material.

5. The negative electrode according to claim 4, wherein
the second layer is arranged to entirely cover the first layer arranged in contact with the negative electrode current collector.

6. The negative electrode according to claim 4 or 5, wherein
the second layer is arranged such that a part of the second layer is in contact with the negative electrode current collector.

7. A lithium secondary battery comprising:
the negative electrode according to any one of claims 4 to 6;
a positive electrode; and
a non-aqueous electrolyte solution.

8. The lithium secondary battery according to claim 7, wherein
the non-aqueous electrolyte solution contains a cyclic carbonate having a fluorine atom.

9. The lithium secondary battery according to claim 8, wherein
a ratio of the cyclic carbonate having a fluorine atom to a whole of the non-aqueous electrolyte solution is 20 mol % or more and 80 mol % or less.

10. The lithium secondary battery according to claim 8 or 9, wherein
the cyclic carbonate having a fluorine atom contains fluoroethylene carbonate (FEC) or difluoroethylene carbonate (DFEC).

11. The lithium secondary battery according to any one of claims 7 to 10, wherein the negative electrode
contains an alloy of lithium, and an element represented by M contained in the second layer,
after the lithium secondary battery is charged and discharged at least once.

12. The lithium secondary battery according to claim 11, wherein
the second layer contains nitrogen as an element represented by A, and
the negative electrode contains lithium nitride, after the lithium secondary battery is charged and discharged at least once.

13. A method for manufacturing a negative electrode that is used for a lithium secondary battery containing a non-aqueous electrolyte solution, the method comprising:
preparing a first layer that contains lithium metal as a negative electrode active material; and
forming a second layer on at least one surface of the first layer, wherein the second layer
consists of a compound represented by a general formula MₓA_{y} (M is an element selected from a group consisting of Al, In, Mg, Ag, Si, and Sn, and A is an element selected from a group consisting of O, N, P, and F, and 0.3<x/y<3), and
has a thickness of 100 nm or less.
